# EUROPEAN PATENT SPECIFICATION

(11) **EP 3 580 603 B1**
(45) Date of publication and mention of the grant of the patent: **05.10.2022**
(21) Application number: 18751011.0
(22) Date of filing: 05.02.2018
(51) Int. Cl.: B60R 1/04, B60R 1/12, G02B 27/01, G09G 3/00, G02B 30/27, G02B 30/30

(54) **VEHICLE DISPLAY COMPRISING PROJECTION SYSTEM**
FAHRZEUGANZEIGE MIT PROJEKTIONSSYSTEM
DISPOSITIF D'AFFICHAGE DE VÉHICULE COMPRENANT UN SYSTÈME DE PROJECTION

(30) Priority: 10.02.2017 US 201762457245 P
(43) Date of publication of application: 18.12.2019
(73) Proprietor: Gentex Corporation, Zeeland, MI 49464 (US)
(72) Inventor: WELLER, Andrew D., Zeeland, Michigan 49464 (US); HOFFMEYER (NEE BECK), Leah R., Zeeland, Michigan 49464 (US); PETERSON, John C., Zeeland, Michigan 49464 (US)
(74) Representative: Müller-Boré & Partner Patentanwälte PartG mbB
(86) International application number: PCT/US2018/016861
(87) International publication number: WO 2018/148146

(56) References cited:
- WO-A2-2004/099825
- US-A- 5 278 532
- US-A1- 2016 209 647
- US-A1- 2016 328 882
- US-A1- 2016 368 417

## Description

### TECHNOLOGICAL FIELD

The present invention generally relates to display devices for vehicles and more particularly to display devices configured to generate image data for ease of viewing a vehicular display.

US 2016/209647 A1 describes a vision system that includes a display disposed within a vehicle. The display may be configured to display images captured by at least one camera disposed to have a field of view exterior of the vehicle. The vision system may include a heads-up display system and the images may be displayed on the heads-up display.

US 2016/328882 A1 describes a system for improving the speed of display of portions of augmented reality displays.

### SUMMARY OF THE DISCLOSURE

The underlying problem is solved by the display system for a vehicle and the method for displaying image data in a vehicle according to the independent claims. Preferred embodiments are defined in the dependent claims.

These and other features, advantages, and objects of the present invention will be further understood and appreciated by those skilled in the art by reference to the following specification, claims, and appended drawings.

### BRIEF DESCRIPTION OF THE DRAWINGS

In the drawings:
FIG. 1 is a projected view demonstrating a display system of a vehicle;
FIG. 2 is an elevational view of a vehicle demonstrating an imaging apparatus of a vehicle;
FIG. 3 is a block diagram of an image processing method for generating augmented image data;
FIG. 4 is a schematic diagram of an image processing method for an occupant of a vehicle;
FIG. 5 is a top schematic view of a vehicle occupant viewing image data; and
FIG. 6 is a block diagram of a display system in accordance with the disclosure.

### DETAILED DESCRIPTION

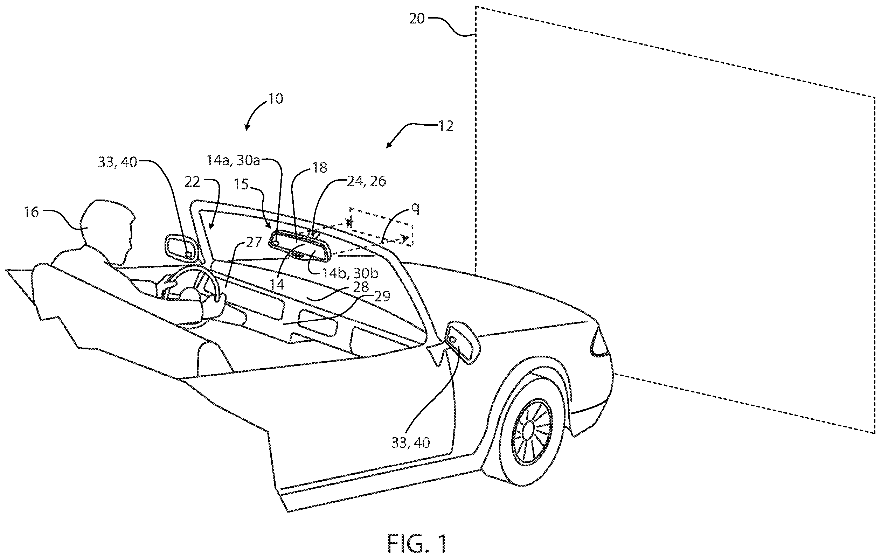

For purposes of description herein, the terms "upper," "lower," "right," "left," "rear," "front," "vertical," "horizontal," and derivatives thereof shall relate to the invention as oriented in FIG. 1. Unless stated otherwise, the term "front" shall refer to the surface of the element closer to an intended viewer of a display, and the term "rear" shall refer to the surface of the element further from the intended viewer of the display. However, it is to be understood that the invention may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises a . . . " does not, without more constraints, preclude the existence of additional identical elements in the process, method, article, or apparatus that comprises the element.

Referring to FIG. 1, the disclosure provides for a display system 10 for a vehicle 12. The display system 10 may be operable to display image data on a display screen 14. In some embodiments, the display system 10 may comprise a focal distance correction feature 15. The focal distance correction feature 15 may be configured to adjust an apparent focal distance of the image data on the display screen 14 relative to an occupant 16 of the vehicle 12. The focal distance correction feature 15 may provide for relief of one or more forms of ocular strain, blurriness, and/or other various issues that may be associated with visual accommodation. In this way, the display system 10 provides for an improved viewing experience of the display screen 14.

Visual accommodation is the process by which eyes focus on objects at various distances. For example, accommodation occurs when changing focus from a nearby object (e.g. the display screen 14) to a far off object in a distant region 20. The amplitude or effective accommodation of humans typically declines with age and may further be complicated by various additional visual irregularities. For example, various visual disorders, including, but not limited to, latent hyperopia, myopia, presbyopia, and pseudomyopia may be related to or have adverse effects that can further exacerbate issues with accommodation. Some of these visual disorders may be treated with corrective lenses, but such treatments may further compound the issues related to accommodation. In order to limit the visual strain related to accommodation and related issues, the disclosure provides for the focal distance correction feature 15 configured to adjust the apparent focal distance of the display screen 14.

As demonstrated in FIG. 1, the display screen 14 may be located in a passenger compartment 22 of the vehicle 12 nearby the occupant 16. Accordingly, one or more issues in accommodation may be apparent when the occupant 16 adjusts focal distance from the nearby display screen 14 to a distant region 20 away from the vehicle 12. For example, one or more images shown on the display screen 14 of the display system 10 may appear blurred when viewed after looking at the distant region 20. Such issues may not typically be associated with conventional rearview mirrors (e.g. reflective mirrors without video displays) because the objects in the mirror appear to have a similar focal distance to objects in the distant region 20. That is, the reflected scenes demonstrated in conventional mirrors may already appear to have a focal distance similar to that of the distant region 20.

Difficulties adjusting between the distant region 20 and nearby objects in the passenger compartment 22 may be more prevalent for older operators (e.g. the occupant 16) of the vehicle 12. Due to a gradual loss of accommodation, older individuals may commonly have greater difficultly changing focus from the distant region 20 to nearby objects (e.g. objects in the passenger compartment 22). As discussed herein, nearby objects may correspond to objects within approximately 1 m from the occupant 16 (e.g. the display screen 14). The distant region 20 may correspond to distances greater than 2 m from the occupant 16. Accordingly, the occupant 16 may face challenges of eye strain as well as magnification correction when viewing nearby objects in the passenger compartment 22 while operating the vehicle 12.

The disclosure may provide for the display system 10 incorporating a focal distance correction feature 15 to limit a perceived difference in focal distance between the display screen 14 and one or more of far off objects in the distant region 20. In this way, the display system 10 may provide for improved visibility of a scene rearward from the vehicle 12 and limit eye strain that may otherwise result from adjustment or accommodation in focal distance from the display screen 14 to the distant region 20.

As discussed herein, the display system 10 may be configured to capture and display image data on the display screen 14. The image data may correspond to one or more scenes that may typically be visible in a rearview mirror. In some embodiments, the display system 10 may provide for the display of panoramic image data captured by one or more cameras or imaging devices on the display screen 14. Accordingly, the disclosure provides for various embodiments of the display system 10, some of which are described in detail in the following description.

Still referring to FIG. 1, in some embodiments, the disclosure may provide for the display system 10 to generate and display augmented image data on the display screen 14. The augmented image data may be configured to be emitted or projected from the display screen 14 to provide the occupant 16 with the visual perception that image data is projected behind the display screen 14 and/or in front of the vehicle 12. The augmented image data may be restructured (e.g. stretched, elongated, manipulated, etc.) and projected through a lens apparatus 18 or lens array in connection with the display screen 14 in order to provide the perception of originating from behind the display screen 14. In some embodiments, a projection distance q of the image data may be provided by the restructured or augmented image data emitted from the display screen 14 and passing through the lens apparatus 18 (e.g. one or more lenses, lens arrays, lenticular lenses, etc.).

The augmented image data projected through the lens apparatus 18 may be visually perceived by the occupant 16 at the projected distance q due to a focal point and/or magnification of the lens apparatus 18 projecting the perceived focal depth behind the display screen 14. For example, the lens apparatus 18 may be configured to adjust the focal depth of the display screen 14 such that a vergence angle of the binocular vision of the occupant 16 is expanded or increased to appear further away from the occupant 16 at the projected distance q. In various embodiments, the image data may also be augmented by the display system 10 to correct for distortion attributed to viewing the image data through the lens apparatus 18. In this way, the system 10 may provide for an improved viewing experience of the image data on the display screen 14 by projecting the perceived distance of the image data to the projected distance q.

In some embodiments, the lens apparatus 18 may comprise a neutral display region 30a configured to transmit the image data from the display screen 14 and/or icons or elements incorporated in a display apparatus 24 of the display system 10. The neutral display region 30a may correspond to an area, region, or zone of the lens apparatus 18 configured to transmit light (e.g. the image data) without optical correction. In this configuration, the image data emitted from the display screen 14 may be transmitted through the neutral display region 30a allowing the corresponding image data to "pass through" without substantial magnification or adjustment to the focal point such that the image data in the neutral display region 30a appears to originate from the display screen 14. That is, the neutral display region 30a may provide for a first portion 14a of the display screen configured to display visual information that appears to be located on a plane formed by a surface of the display screen 14 or the lens apparatus 18. The second portion 14b may correspond to a projected display region 30b configured to display visual information that appears to originate from the projected distance q.

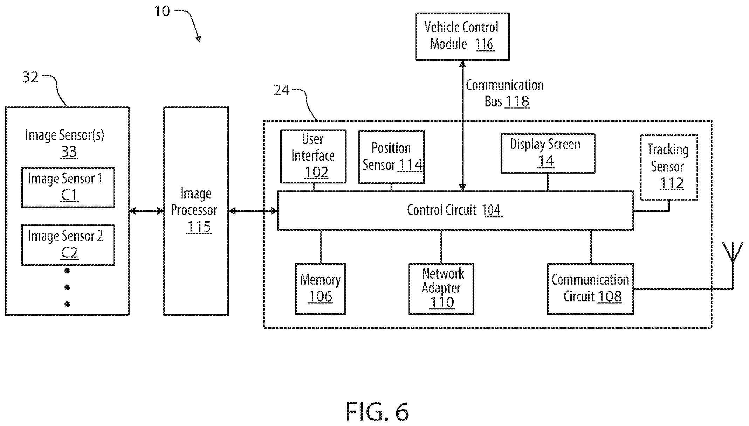

The neutral display region 30a may provide for the display screen to provide for one or more soft keys, which may be displayed on the display screen 14 as buttons, icons, graphics and/or text in the plane of the display screen 14. For example, in some embodiments, the display apparatus 24 may comprise a user interface comprising a sensory grid or touch-screen functionality. The user interface may be utilized in combination with the soft keys transmitted through the neutral display region 30a to provide for a human-machine interface (HMI). In this configuration, the display apparatus 24 may provide for the soft keys, buttons, text, or graphics to appear as though they originate from the display screen 14 through the neutral display region 30a. Further discussion regarding the user interface is discussed in reference to FIG. 6.

In some embodiments, the neutral display region 30a may be configured as a switchable optical correction mechanism, which may be referred to as a selective or switchable neutral display region. In this configuration, the switchable neutral display region may comprise a liquid crystal display (LCD) or various electro-optic elements that may be controlled by the system 10 to facilitate an "on demand" focal change feature. Accordingly, in a first configuration, the switchable neutral display region may shift or apply a correction to the image data emitted from the display screen 14 such that the image data appears to originate from the projected distance q. Additionally, in a second configuration, the switchable neutral display region may function as the neutral display region 30a allowing the corresponding image data to "pass through" without substantial magnification or adjustment to the focal point such that the image data in the neutral display region 30a appears to originate from the display screen 14.

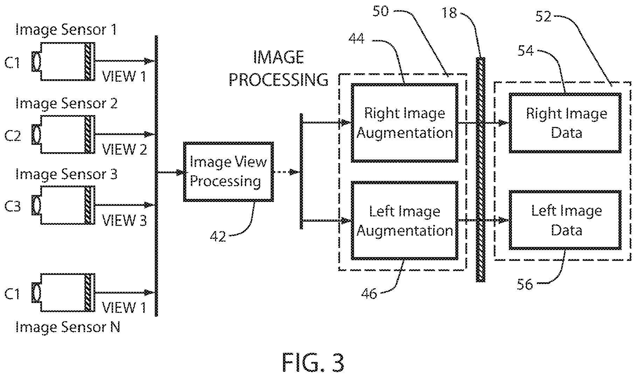

As discussed further in reference to FIGS. 3-5, the display system 10 may be configured to capture and display the image data or augmented image data on the display screen 14. The image data may comprise image data in the form of right eye image data or frames and left eye image data or frames. The right eye image data may be transmitted from the display screen 14 such that it is received by the right eye of the occupant 16. The left eye image data may be transmitted from the display screen 14 such that it is received by the left eye of the occupant 16. Accordingly, the display screen 14 may form a portion of a display apparatus 24 configured to project specific frames of the image data to each of the left eye and the right eye of the occupant 16.

According to various embodiments, the display apparatus 24 may comprise similar features to an autostereoscopic or automultiscopic display. The following references may include various implementations for display systems and camera systems configured to provide for autostereoscopic and/or automultiscopic functionality: U.S. Patent No. 9,179,134 B2, entitled "MULTI-LAYER PLENOPTIC DISPLAYS THAT COMBINE MULTIPLE EMISSIVE AND LIGHT MODULATING PLANES," filed November 27, 2012, by Ranieri et al.; U.S. Patent Application Publication No. 2015/0334379 A1, entitled "DISPLAY UNIT FOR ROTATABLY DISPLAYING AN AUTOSTEREOSCOPIC PRESENTATION," filed December 24, 2012, by Lin Du et al; U.S. Patent No. 6,377,295 B1, entitled "OBSERVER TRACKING DIRECTIONAL DISPLAY," filed April 23, 2002, by Graham Woodgate et al.; U.S. Patent No. 9,843,776, entitled "MULTI-PERSPECTIVE STEREOSCOPY FROM LIGHT FIELDS," filed July 15, 2015, by Changil Kim et al.; U.S. Patent Application Publication No. 2014/0125783 A1, entitled "AUTOSTEREOSCOPIC IMAGE DISPLAY AND METHOD FOR DRIVING THE SAME," filed November 6, 2013, by Bogyun Chung et al.; U.S. Patent No. 8,947,605 B2, entitled "IMAGE DATA PLACEMENT METHOD FOR A TIME MULTIPLEXED AUTOSTEREOSCOPIC DISPLAY," filed September 13, 2012, by Jesse B. Eichenlaub; and U.S. Patent Application Publication No. 2009/0282429 A1, entitled "VIEWER TRACKING FOR DISPLAYING THREE DIMENSIONAL VIEWS," filed May 7, 2008, by Stefan Olsson et al.

As discussed herein, the display system 10 may be configured to generate separate images for the right eye and the left eye of the occupant 16. Additionally, the display system 10 may be configured to generate a plurality of views that may be associated with a plurality of image sensors. Embodiments of the display system 10 configured to provide for a plurality of views may utilize one or more stereoscopic display methods to communicate the image data to the left eye and the right eye independently. In this configuration, the display apparatus 24 may provide for views that may normally be shown on a rearview mirror and conventional side mirrors.

In some embodiments, the display apparatus may be configured to track the position of the occupant 16 in the passenger compartment 22. For example, the display apparatus 24 may comprise a sensor configured to track a location of a face and/or the eyes of the occupant 16. In this way, the display apparatus 24 may be operable to track a position of the eyes of the occupant 16 to control specific pixels in a pixel array 74 configured to target the left eye or the right eye. The eyes of the operator may be tracked by one or more tracking sensors that may be incorporated in a display apparatus 24. An example of a tracking sensor is discussed further in reference to FIG. 6.

In various embodiments, the lens or lens apparatus 18 of the display apparatus 24 may correspond to a parallax-based lens array, a lenticular sheet, and/or a fish-eye array. Such display technologies may be used to provide an autostereoscopic or automultiscopic experience for the occupant 16, which may provide for a projected view of the display screen 14. Parallax-based displays may incorporate a parallax barrier and/or employ horizontally modulated blocking patterns to communicate different frames of image data to the first eye and the second eye of the occupant 16. The parallax barrier may correspond to a device that may be placed in front of the display screen 14, such as a liquid crystal display (LCD) or other displays, to allow the display screen 14 to show or display a stereoscopic or image data projected to the focal plane at the projected distance q without the need for the viewer to wear complementary active or passive stereoscopic lenses (e.g. 3D glasses). The parallax barrier may include a layer of material with a series of precision slits that allow each eye of a viewer to see a different set of pixels.

In an exemplary embodiment, the display apparatus 24 of the display system 10 may be incorporated in an interior rearview assembly 26. The display apparatus 24 may be mounted or otherwise attached to a vehicle 12 in a variety of locations. For example, the display apparatus 24 may be integrated into a gauge cluster 27, a dashboard 28, a center stack 29 (e.g., infotainment center), side mirrors, and/or a headliner of the vehicle 12. The display apparatus 24 may be located in other peripheral locations. For example, the display apparatus 24 may be mounted to a visor. The display apparatus 24 may be mounted to other surfaces of a vehicle 12 (e.g. windshield, door panel, or other vehicle components).

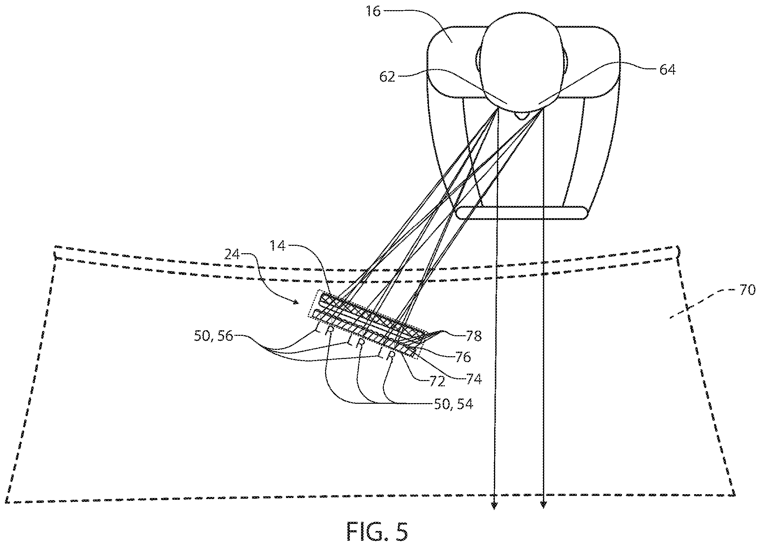

The display apparatus 24 may be configured to form a thin assembly by limiting a space between the lens apparatus 18 and a display panel configured to output image data. The thin assembly may enable practical applications of the display apparatus 24 by utilizing an array of lenses to form the lens apparatus 18. By utilizing an array of lenses or similar optical configurations (e.g. a parallax-based lens array, a lenticular sheet, and/or a fish-eye lens array), a spacing between the display panel and the lens apparatus 18 may be minimized. Accordingly, an array of lenses may be utilized for the lens apparatus 18, which may provide for the display apparatus 24 to be housed in a small package suitable for use in the vehicle 12. An example of the lens apparatus 18 implemented in the rearview assembly as a lenticular lens is discussed further in reference to FIG. 5. Though a lenticular lens is demonstrated in the exemplary embodiment of FIG. 5, various lenses or arrays of optical devices may be similarly implemented as the lens apparatus 18 in accordance with the disclosure.

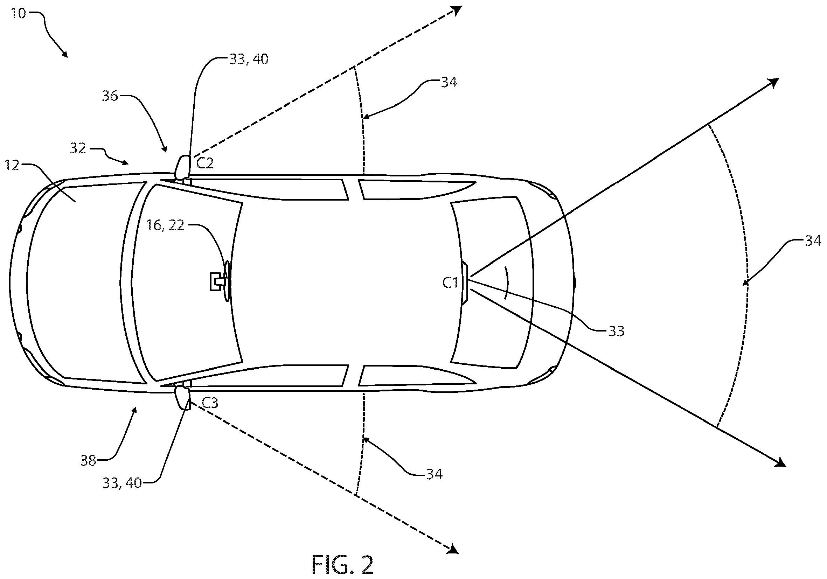

Referring now to FIG. 2, a diagram of an imaging apparatus 32 of the vehicle 12 is shown. In an exemplary embodiment, a plurality of image sensors 33 of the imaging apparatus 32 may correspond to a first image sensor C1, a second image sensor C2, and a third image sensor C3. Each of the image sensors 33 may have a field of view 34 focusing on an environment proximate the vehicle 12. In the various implementations discussed herein, the image sensors C1-C3 may be implemented to provide views of the environment proximate the vehicle 12 that may be displayed on the display screen 14 or any form of display device.

The image sensors 33 may be arranged in various locations on the vehicle 12. In an exemplary embodiment, the image sensors 33 may be arranged such that each of a plurality of fields of view 34 of the image sensors C1-C3 is configured to capture a significantly different portion of the surrounding environment. Each of the image sensors 33 may comprise any form of device configured to capture image data, for example Charge Coupled Device (CCD) and Complementary Metal Oxide Semiconductor (CMOS) image sensors. Though three image sensors C1, C2, and C3 are discussed in reference to the present implementation, the number of image sensors may vary based on the specifications of the particular image sensors and/or a desired number of fields of view 34 for the display system 10.

The image sensors C1, C2, and C3 are disposed on the vehicle 12 and oriented such that each field of view 34 of the image sensors 33 is directed toward a substantially different region. A first image sensor C1 may be disposed centrally on a rear facing portion of the vehicle 12 proximate to a tailgate or similar area of the vehicle 12. In some embodiments, the image sensor C1 may be disposed proximate to a rear-bumper and/or a center high mount stop light (CHMSL). A second image sensor C2 and a third image sensor C3 may be disposed on a passenger's side 36 and a driver's side 38 of the vehicle 12, respectively. The second image sensor C2 and the third image sensor C3 may be configured to capture image data corresponding to the environment proximate to the side regions of the vehicle 12.

In some implementations, the second image sensor C2 and the third image sensor C3 may be disposed in side mirrors 40 of the vehicle 12. The image sensors C2 and C3, in combination with the first image sensor C1, may be configured to capture image data corresponding to a rearward-directed region relative the forward direction of the vehicle 12. In some embodiments, the image sensors 33 may be configured to capture an increased or decreased viewing angle depending on the particular application. In some embodiments, the image sensors 33 may be configured to capture approximately the entire environment surrounding the vehicle 12.

As discussed further in reference to FIGS. 3, the image sensors 33 may be in communication with the image processor configured to process image data from each of the fields of view 34 captured by the image sensors 33. The image processor may be configured to generate augmented image data from the fields of view 34 for each of the right eye and the left eye of the occupant 16. In this configuration, the display system 10 may provide for an enhanced viewing experience by controlling the image data to provide a visual perception for the occupant 16 that the image data originates from behind the display screen 14 at a projected distance q. Though discussed in detail in reference to the interior rearview assembly 26, the display system 10 may be utilized in various portions of the vehicle (e.g. a vehicle console, gauge cluster, side mirrors, etc.). As such, the disclosure provides for various embodiments of vehicle displays that may be utilized for a variety of applications.

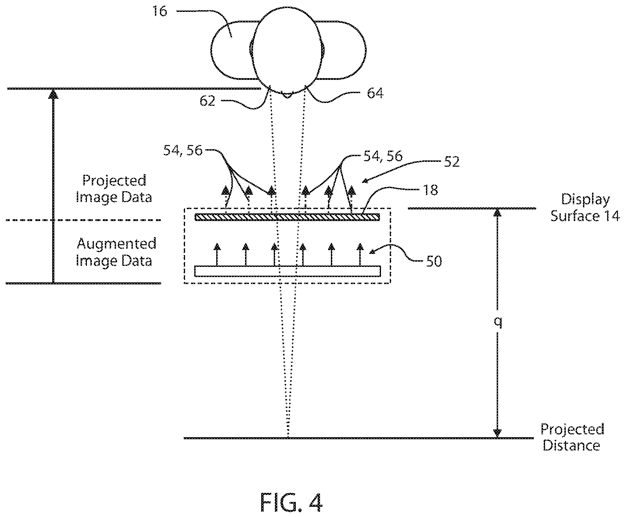

Referring now to FIGS. 3 and 4, diagrams of an image processing method that may be processed by the image processor are shown. The image processor may receive image data from one or more of the image sensors C1, C2, and C3 and encode or process the image data for demonstration on the display screen 14. For example, the first image sensor C1 may provide for a first view (VIEW 1), the second image sensor C2 may provide for a second view (VIEW 2), and the third image sensor C3 may provide for a third view (VIEW 3). The image views may be processed by the image processor, which may comprise each of the views being cropped, enhanced, stitched, and/or composited for display on the display screen 14 (42).

The image data received from the image processor may further be processed according to one or more augmentation or correction algorithms to generate augmented image data 50. In some embodiments, the augmented image data 50 may comprise a right image augmentation (44) and a left image augmentation (46). The augmentation or processing of the image data may comprise restructuring of various portions or segments of the image data to correct for a distortion of the lens apparatus 18 and/or facilitate lateral movement of the focal point of the eyes of the occupant 16. For example, the augmentation or processing of the image data may comprise parsing segments or portions of the image data such that the augmented image data 50 has an appropriate amount of overlap to facilitate lateral movement of the focal point to facilitate the image data to be perceived at the projected distance q after being transmitted through the lens apparatus 18. The processing or augmentation may result in a grid like restructuring or stretching of the image data in the vertical and horizontal display dimensions. In this way, display system 10 may provide the perception of the image data projected from the display screen 14 to appear as though it is originating from behind the display screen 14, while also correcting for a distortion caused by the projection.

The augmented image data 50 from the display screen 14 may be emitted from the display screen 14 into the lens apparatus 18. The image data may then be projected to the occupant 16 as projected image data 52. In some embodiments, the projected image data 52 may comprise right image data (54) and left image data (56). In this way, the display apparatus 24 may be configured to display the image data within the passenger compartment 22 having an appearance of originating from the projected distance q. The projected distance q may vary based on the desired design and configuration of the display apparatus 24. For example, the projected distance q or the display distance may be greater than or equal to 400 mm and may be adjusted to greater than a meter. Additionally in some embodiments, the focal point of the lens apparatus 18 (or lens array) may be defined as being located at optical infinity. By providing the perception to the occupant 16 that the image data originates from the projected distance q, the display apparatus 24 may serve to limit or alleviate accommodation issues associated with viewing the nearby image data on the display screen 14 and objects located in the distant region 20.

As discussed herein, in some embodiments, the system 10 may be operable to generate image data for an autostereoscopic display. Referring now to FIGS. 4 and 5, the display apparatus 24 is shown projecting the right image data 54 and the left image data 56 in order to provide for independent correction of the augmented image data 50 for a right eye 62 and a left eye 64 of the occupant 16. The display system 10 may be configured to communicate right image data 54 to the right eye 62 and left image data 56 to the left eye 64. As discussed herein, the display apparatus 24 may correspond to an autostereoscopic display device configured to project the right image data 54 to the right eye 62 and the left image data 56 to the left eye 64. In this configuration, the display system 10 may communicate the image data to the occupant 16 to provide the perception that the image data originates at the projected distance q.

As shown in FIG. 5, the display apparatus 24 is shown in reference to a windshield 70 of the vehicle 12. To provide such functionality, the display apparatus 24 may comprise a display panel 72 corresponding to a pixel array 74 and a lenticular lens 76 formed on the display panel 72. A rear surface of the display screen 14 may face the lenticular lens 76. The display panel 72 may be a variety of display types, which may be the pixel array 74. The pixel array 74 may be arranged in rows and columns. For example, the display panel 72 may correspond to a liquid crystal display (LCD), a plasma display, an organic light emitting diode (OLED) display, a field emission display (FED) panel, or various other displays.

The lenticular lens 76 may comprise long cylindrical lens elements 78. The lens elements 78 may be arranged in parallel and be aligned with the columns of the pixel array 74. Accordingly, the lenticular lens 76 may be disposed over the display panel 72. The lenticular lens 76 may separate the right image data 54 from the left image data 56 based on a location of each pixel relative to the cylindrical elements 78. In this way, the display apparatus 24 may be configured to direct the right image data 54 to the right eye 62 and the left image data 56 to the left eye 64.

As demonstrated in FIG. 5, the display apparatus 24 may be configured to form a thin assembly by limiting a space between the lens apparatus 18 (e.g. the lenticular lens 76) and the display panel 72. The thin assembly may enable practical applications of the display apparatus 24 by utilizing an array of lenses to form the lens apparatus 18. In such embodiments, the array of lenses or similar optical configurations (e.g. a parallax-based lens array, a lenticular sheet, and/or a fish-eye lens array) may be implemented to minimize a spacing between the display panel 72 and the lens apparatus 18. Accordingly, an array of lenses may be utilized for the lens apparatus 18, which may provide for the display apparatus 24 to be housed in a small package suitable for use in the vehicle 12. Though the lenticular lens 76 is demonstrated in the exemplary embodiment of the lens apparatus 18 in FIG. 5, various lenses or arrays of optical devices may be similarly implemented without departing from the spirit of the disclosure.

Referring now to FIG. 6, a block diagram of the display system 10 is shown. The display system 10 may include a user interface 102 in the form of one or more buttons in communication with a control circuit 104. The user interface 102 may provide for the display system 10 to receive one or more inputs to control operational settings, some of which are discussed herein. An exemplary embodiment of the display apparatus 24 may incorporate the elements shown in the dashed line box designated as the display apparatus 24. In some embodiments, the user interface 102 may include input devices, such as touchscreen displays, switches, microphones, knobs, touch sensors (e.g., projected capacitance sensor resistance based touch sensor, resistive touch sensor, or other touch sensor), proximity sensors (e.g., projected capacitance, infrared, ultrasound, infrared, or other proximity sensor), or other hardware configured to generate an input from a user action.

The display system 10 may comprise the display apparatus 24. The display apparatus 24 may comprise the display panel 72 comprising the pixel array 74 and a lenticular lens 76 proximate the display panel 72. The display panel 72 may be a variety of display types having the pixel array 74, which may be arranged in rows and columns. For example, the display panel 72 may correspond to a liquid crystal display (LCD), a plasma display, an organic light emitting diode (OLED) display, a field emission display (FED) panel, or various other displays. The display apparatus 24 may further incorporate a speaker, haptic feedback device (e.g., vibration motor), LEDs, or other hardware component for providing an output.

The control circuit 104 may include various types of control circuitry, digital and/or analog, and may include a microprocessor, microcontroller, application-specific integrated circuit (ASIC), graphics processing unit (GPU), or other circuitry configured to perform various input/output, control, analysis, and other functions to be described herein. In other embodiments, the control circuit 104 may be a system on a chip (SoC) individually or with additional hardware components described herein. The control circuit 104 may further include a memory 106 (e.g., random access memory, read only memory, flash memory, hard disk storage, flash memory storage, solid state drive memory, etc.). In further embodiments, the control circuit 104 may function as a controller for one or more hardware components included in the display system 10. For example, the control circuit 104 may function as a controller for a touchscreen display or other operator input device, a controller for a transceiver, transmitter, receiver, or other communication device (e.g., implement a Bluetooth communications protocol).

In some embodiments, the control circuit 104 may be configured to receive inputs from the user interface 102. The inputs may be converted into control signals that may be identified and utilized to output one or more control signals and/or transmit data. In this configuration, the display system 10 may communicate (e.g. send and/or receive signals and/or data) to control various functions of the display or settings or functions of the vehicle 12.

The memory 106 may be used to facilitate the functions of the display system 10 as described herein. Memory 106 may include computer code modules, data, computer instructions, or other information which may be executed by the control circuit 104 or otherwise facilitate the functions of the display system 10 described herein. For example, memory 106 may include encryption codes, pairing information, identification information, device registry configurations, image augmentation information, etc. The memory 106 and/or the control circuit 104 may facilitate the functions described herein using one or more programming techniques, data manipulation techniques, and/or processing techniques, such as using algorithms, routines, lookup tables, arrays, searching, databases, comparisons, instructions, etc.

The display system 10 may further comprise a communication circuit 108. The communication circuit 108 may correspond to a transceiver circuit or transmitter circuit coupled to the control circuit 104. The transceiver circuit may provide for the display system 10 to transmit and/or receive wireless communication signals. The wireless communication signals may be transmitted to or received from a variety of wireless devices (e.g., an original transmitter, home electronic device, mobile communications device, and/or remote device). The communication circuit 108 may be controlled by the control circuit 104. For example, the control circuit 104 may turn on or off the communication circuit 108, the control circuit 104 may send data using the communication circuit 108, format information, an activation signal, control signal, and/or other signal or data for transmission via the communication circuit 108, or otherwise control the communication circuit 108. Inputs from the communication circuit 108 may also be received by the control circuit 104. For example, software configurations, updates, user settings and other information may be received by the communication circuit 108 and stored in the memory 106 by the control circuit 104.

The control circuit 104 may be also coupled to a network adapter 110, receivers, and/or transmitters. In some embodiments, the network adapter 110 may be configured to communicate with the image sensors 33. In some embodiments, the network adapter 110 may be or include a cellular transceiver. In this configuration, the display system 10 may use the network adapter 110 and/or an additional transceiver (e.g., a cellular transceiver) to access the internet, other networks, and/or network hardware. In some embodiments, the display system 10 may access the internet, other networks, and/or network hardware through an intermediate device in communication with the display system 10, such as the mobile device.

In an exemplary embodiment, the network adapter 110 may be configured to send/receive data and/or control signals to a mobile device. The network adapter 110 may communicate via various wireless communication protocols. For example, communication protocols may include, but are not limited to, Bluetooth^{™} (e.g., a Bluetooth low energy (BLE), Wi-Fi (IEEE 802.11), ZigBee^{®}, cellular, etc.), a wired interface and/or protocol (e.g., Ethernet, universal serial bus (USB), Firewire^{®}, etc.), or other communications connection (e.g. infrared, optical, ultrasound, etc.).

In some embodiments, the display system 10 may track a position of the occupant 16 or a viewer (e.g. a position of the eyes of the occupant 16) with the tracking sensor 112. The tracking sensor 112 may be implemented as an ultrasound sensor, an infrared sensor, a camera sensor/imager, a heat detector, etc. In general, the tracking sensor 112 may identify a position of the occupant 16 such that an image processor 115 may generate views of image data (e.g. the augmented image data) from the image sensors 33. The augmented image data 50 may correspond to views that appear to the occupant 16 as though they are projected at the projected distance q.

In some embodiments, the display system 10 may comprise a position sensor 114 configured to identify a position or orientation of the display apparatus 24 relative to a forward direction of the vehicle 12. The position sensor 114 may correspond to an electrical or electromechanical sensor (e.g. an encoder, potentiometer, proximity sensor, compass, gyroscope, etc.), and may be configured to identify an angle of the display apparatus 24 or the display screen 14 relative to the forward direction of the vehicle 12. In this way, the image processor 115 may be operable to process the image data to select a plurality of views to generate the image data based on the angle of the display screen 14.

The control circuit 104 may be in communication with a vehicle control module 116 via a communication bus 118 of the vehicle 12. The communication bus 118 may be configured to deliver signals to the control circuit 104 identifying various states of the vehicle 12. For example, the communication bus 118 may be configured to communicate an operating condition of the vehicle 12 (e.g. the ignition is active, a gear selection, a lighting activation or setting, etc.), an ambient light level, a seat occupancy, a door ajar signal, driver/occupant identity or any other information or control signals that may be communicated via the communication bus 118. In this way, the control circuit 104 may communicate with the vehicle control module 116 to identify a variety of conditions and/or settings of the vehicle 12.

In some embodiments, the display system 10 may be a display similar to those disclosed in the following references. Examples of display assemblies that may be utilized with the disclosure may include U.S. Patent Nos. 6,572,233 entitled "REARVIEW DISPLAY MIRROR," 8,237,909 entitled "VEHICULAR REARVIEW MIRROR ASSEMBLY INCLUDING INTEGRATED BACKLIGHTING FOR A LIQUID CRYSTAL DISPLAY (LCD)," 8,411,245 entitled "MULTI-DISPLAY MIRROR SYSTEM AND METHOD FOR EXPANDED VIEW AROUND A VEHICLE," and 8,339,526 entitled "VEHICLE REARVIEW MIRROR ASSEMBLY INCLUDING A HIGH INTENSITY DISPLAY".

The following references may include various implementations for imager systems providing rearward facing panoramic views: U.S. Patent No. 8,237,909 B2, entitled "VEHICLE REARVIEW MIRROR ASSEMBLY INCLUDING INTEGRATED BACKLIGHTING FOR A LIQUID CRYSTAL DISPLAY (LCD)," filed February 6, 2009, by John B. Ostreko et al.; and U.S. Patent No. 8,411,245, entitled "MULTI-DISPLAY MIRROR SYSTEM AND METHOD FOR EXPANDED VIEW AROUND A VEHICLE," filed September 30, 2009, by Ethan J. Lee et al. Though the display system 10 in the various implementations disclosed herein is shown incorporated in a rearview display system, a display may similarly be incorporated in a vehicle forward center console, as a heads up display, or in any other location that may be visible to an operator or occupant 16 of the vehicle 12.

It will be understood by one having ordinary skill in the art that construction of the described invention and other components is not limited to any specific material. Other exemplary embodiments of the invention disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the invention as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Other substitutions, modifications, changes, and omissions may be made in the design, operating conditions, and arrangement of the desired and other exemplary embodiments.

The exemplary structures and processes disclosed herein are for illustrative purposes and are not to be construed as limiting.

## Claims

1. A display system (10) for a vehicle (12), the display system (10) comprising:
a display screen (14) configured to emit augmented image data in an emission direction, wherein the display screen (14) comprises a first portion (14a) and a second portion (14b);
a lens apparatus (18) configured to receive the augmented image data from the display screen (14), wherein the lens apparatus (18) is configured to project the augmented image data to a focal distance (q) at a different location from that of a display surface of the display screen (14); and
an image processor (115) configured to generate the augmented image data from image data supplied to the image processor (115), wherein the augmented image data is configured to correct for a distortion caused by the image data passing through the lens apparatus (18),
wherein the image processor (115) is further configured to control a switching of the visual projection of a first portion (14a) of the image data between a first configuration and a second configuration,
wherein the first portion (14a) of the display screen (14) is a switchable neutral display region comprising an electro-optic element that is controlled by the display system (10),
wherein, in the first configuration, the electro-optic element is configured to shift or apply a correction to the first portion of the image data emitted from the display screen (14), such that the first portion of the image data appears to originate from the focal distance (q),
wherein, in the second configuration, the electro-optic element is configured to allow the first portion of the image data to pass through the electro-optic element without substantial magnification or adjustment to the focal point, such that the first portion of the image data in the first portion (14a) of the display screen (14) appears to originate from the display screen (14), and
wherein the second portion (14b) of the display screen (14) is configured to display a second portion of the image data visually projected to the focal distance (q).

2. The display system (10) according to claim 1, wherein the focal distance (q) is projected in a projection direction opposite the emission direction.

3. The display system (10) according to any one of the previous claims, further comprising:
at least one image sensor (33) configured to capture the image data in a field of view comprising a scene proximate to the vehicle (12) and supply the image data to the image processor (115).

4. The display system (10) according to any one of the previous claims, wherein the lens apparatus (18) comprises a lens array configured to project the augmented image data to the focal distance (q) by controlling a parallax effect of the augmented image data.

5. The display system (10) according to any one of the previous claims, wherein the display system (10) is operable to generate image data for an autostereoscopic display.

6. The display system (10) according to any one of the previous claims, wherein the display system (10) corresponds to a rearview video display apparatus.

7. The display system (10) according to any one of the previous claims, wherein the first portion (14a) of the display screen (14) is configured to display at least one graphic corresponding to a user interface (102) comprising touchscreen functionality.

8. A method for displaying image data in a vehicle (12), the method comprising:
processing image data to generate augmented image data, wherein the augmented image data corrects for a distortion caused by the image data passing through a lens apparatus (18);
emitting the augmented image data from a display screen (14), the display screen (14) comprising a first portion (14a) and a second portion (14b);
controlling, by the image processor (115), a switching of the visual projection of a first portion of the image data between a first configuration and a second configuration;
transmitting the augmented image data through the lens apparatus (18); and
projecting the image data from the lens apparatus (18) to the focal distance (q),
wherein the focal distance (q) is located at a greater distance from a passenger (16) of the vehicle (12) than a display surface of the display screen (14), and
wherein the first portion (14a) of the display screen (14) is a switchable neutral display region comprising an electro-optic element that is controlled by the display system (10), the method further comprising the steps of:
shifting or applying a correction to the first portion of the image data emitted from the display screen (14) by the electro-optic element in the first configuration, such that the first portion of the image data appears to originate from the focal distance (q),
allowing the first portion of the image data to pass through the electro-optic element without substantial magnification or adjustment to the focal point by the electro-optic element in the second configuration, such that the first portion of the image data in the first portion (14a) of the display screen (14) appears to originate from the display screen (14), and
displaying, by the second portion (14b) of the display screen (14), a second portion of the image data visually projected to the focal distance (q).

9. The method according to claim 8, further comprising:
capturing the image data comprising a scene proximate to the vehicle (12).

10. The method according to claim 9, wherein the scene comprises a rearward directed field of view relative to a forward operating direction of the vehicle (12).

11. The method according to any one of claims 8-10, further comprising:
independently generating the augmented image data for a right eye of the passenger (16) as right eye image data and a left eye of the passenger (16) as left eye image data.

12. The method according to claim 11, further comprising:
tracking a first location of the right eye and a second location of the left eye of the passenger (16),
wherein, optionally, the method further comprises:
projecting the right eye image data to the first location and the left eye image data to the second location,
wherein, optionally, the method further comprises:
projecting the right eye image data and the left eye image data from a pixel array to the first location and the second location by selectively activating pixels of the pixel array aligned with the first location and the second location through the lens apparatus (18).

## Patentansprüche

1. Ein Anzeige-System (10) für ein Fahrzeug (12), wobei das Anzeige-System (10) folgendes umfasst:
einen Anzeige-Bildschirm (14) konfiguriert zur Ausgabe erweiterter Bilddaten in eine Ausgaberichtung, wobei der Anzeige-Bildschirm (14) einen ersten Abschnitt (14a) und einen zweiten Abschnitt (14b) umfasst;
eine Linsenvorrichtung (18) konfiguriert zum Erhalt der erweiterten Bilddaten des Anzeige-Bildschirms (14), wobei die Linsenvorrichtung (18) konfiguriert ist zur Projektion der erweiterten Bilddaten zu einer Brennweite (q) an einen verschiedenen Ort von dem der Anzeige-Fläche des Anzeige-Bildschirms (14); und
einen Bildprozessor (115) konfiguriert zur Erzeugung der erweiterten Bilddaten aus Bilddaten mit denen der Bildprozessor (115) versorgt wird, wobei die erweiterten Bilddaten konfiguriert sind, um eine Verzerrung, verursacht durch den Durchgang der Bilddaten durch die Linsenvorrichtung (18), zu korrigieren,
wobei der Bildprozessor (115) zudem konfiguriert ist zur Steuerung bzw. Regelung einer Umschaltung der visuellen Projektion eines ersten Abschnitts der Bilddaten zwischen einer ersten Konfiguration und einer zweiten Konfiguration,
wobei der erste Abschnitt (14a) des Anzeige-Bildschirms (14) eine schaltbare neutrale Anzeige-Region ist, umfassend ein elektro-optisches Element, welches durch das Anzeige-System (10) gesteuert bzw. geregelt wird,
wobei in der ersten Konfiguration das elektro-optische Element konfiguriert ist zur Verschiebung oder Anwendung einer Korrektur des ersten Abschnitts der Bilddaten ausgegeben durch den Anzeige-Bildschirm (14), sodass der erste Abschnitt der Bilddaten aus der Brennweite (q) zu stammen scheint,
wobei in der zweiten Konfiguration das elektro-optische Element konfiguriert ist dem ersten Abschnitt der Bilddaten zu erlauben das elektro-optische Element zu durchlaufen ohne erhebliche Vergrößerung oder Anpassung mit Bezug auf den Brennpunkt, sodass der erste Abschnitt der Bilddaten im ersten Abschnitt (14a) des Anzeige-Bildschirms (14) aus dem Anzeige-Bildschirm (14) zu stammen scheint und
wobei der zweite Abschnitt (14b) des Anzeige-Bildschirms (14) konfiguriert ist zur Anzeige eines zweiten Abschnitts der Bilddaten, visuell projiziert auf die Brennweite (q).

2. Das Anzeige-System (10) gemäß Anspruch 1, wobei die Brennweite (q) in eine der Ausgaberichtung gegenüberliegende Projektionsrichtung projiziert wird.

3. Das Anzeige-System (10) gemäß einem der vorangegangenen Ansprüche, zudem umfassend:
zumindest einen Bildsensor (33) konfiguriert zur Erfassung der Bilddaten in einem Sichtfeld, umfassend eine dem Fahrzeug (12) nahegelegene Szene und zur Lieferung der Bilddaten an den Bildprozessor (115).

4. Das Anzeige-System (10) gemäß einem der vorangegangenen Ansprüche, wobei die Linsenvorrichtung (18) ein Linsen-Array umfasst, konfiguriert zur Projektion der erweiterten Bilddaten auf die Brennweite (q) durch Steuerung bzw. Regelung eines Parallaxen Effekts der erweiterten Bilddaten.

5. Das Anzeige-System (10) gemäß einem der vorangegangenen Ansprüche, wobei das Anzeige-System (10) betreibbar ist zur Erzeugung von Bilddaten für eine autostereoskopische Anzeige.

6. Das Anzeige-System (10) gemäß einem der vorangegangenen Ansprüche, wobei das Anzeige-System (10) einer Rückfahrvideoanzeigevorrichtung entspricht.

7. Das Anzeige-System (10) gemäß einem der vorangegangenen Ansprüche, wobei der erste Abschnitt (14a) des Anzeige-Bildschirms (14) konfiguriert ist zur Anzeige von mindestens einer Graphik entsprechend einem Benutzer-Interface (102), umfassend eine Touchscreen-Funktion.

8. Ein Verfahren zur Anzeige von Bilddaten in einem Fahrzeug (12), wobei das Verfahren umfasst:
Verarbeiten von Bilddaten zur Erzeugung erweiterter Bilddaten, wobei die erweiterten Bilddaten eine Verzerrung, verursacht durch den Durchgang der Bilddaten durch die Linsenvorrichtung (18), korrigieren;
Ausgeben der erweiterten Bilddaten von einem Anzeige-Bildschirm (14), wobei der Anzeige-Bildschirm (14) einen ersten Abschnitt (14a) und einen zweiten Abschnitt (14b) umfasst;
Steuern bzw. Regeln, durch den Bildprozessor (115), einer Umschaltung der visuellen Projektion eines ersten Abschnitts der Bilddaten zwischen einer ersten Konfiguration und einer zweiten Konfiguration;
Übertragen der erweiterten Bilddaten durch die Linsenvorrichtung (18); und
Projizieren der Bilddaten von der Linsenvorrichtung (18) auf die Brennweite (q),
wobei sich die Brennweite (q) in größerer Entfernung von einem Passagier (16) des Fahrzeugs (12) verglichen zur Anzeige-Fläche des Anzeige-Bildschirms (14) befindet und
wobei der erste Abschnitt (14a) des Anzeige-Bildschirms (14) eine schaltbare neutrale Anzeige-Region ist, umfassend ein elektro-optisches Element, welches durch das Anzeige-System (10) gesteuert bzw. geregelt wird, wobei das Verfahren folgende weitere Schritte umfasst:
Verschieben oder Anwenden einer Korrektur des ersten Abschnitts der Bilddaten ausgegeben durch den Anzeige-Bildschirm (14) durch das elektro-optische Element in der ersten Konfiguration, sodass der erste Abschnitt der Bilddaten aus der Brennweite (q) zu stammen scheint,
Erlauben des Durchlaufens des ersten Abschnitts der Bilddaten durch das elektro-optische Element ohne erhebliche Vergrößerung oder Anpassung mit Bezug auf den Brennpunkt durch das elektro-optische Element in der zweiten Konfiguration, sodass der erste Abschnitt der Bilddaten im ersten Abschnitt (14a) des Anzeige-Bildschirms (14) aus dem Anzeige-Bildschirm (14) zu stammen scheint und Anzeigen eines zweiten Abschnitts der Bilddaten, visuell projiziert auf die Brennweite (q), durch den zweiten Abschnitt (14b) des Anzeige-Bildschirms (14).

9. Verfahren gemäß Anspruch 8, zudem umfassend:
Erfassen der Bilddaten, die eine dem Fahrzeug (12) nahegelegene Szene umfassen.

10. Verfahren gemäß Anspruch 9, wobei die Szene ein rückwärts gerichtetes Sichtfeld relativ zu einer Vorwärts-Betriebsrichtung des Fahrzeugs (12) umfasst.

11. Verfahren gemäß einem der Ansprüche 8-10, zudem umfassend:
unabhängiges Erzeugen der erweiterter Bilddaten für ein rechtes Auge des Passagiers (16) als Rechte-Auge-Bilddaten und ein linkes Auge des Passagiers (16) als Linke-Auge-Bilddaten.

12. Verfahren gemäß Anspruch 11, zudem umfassend:
Verfolgen eines ersten Orts des rechten Auges und eines zweiten Orts des linken Auges des Passagiers (16),
wobei das Verfahren optional zudem umfasst:
Projizieren der Rechte-Auge-Bilddaten zum ersten Ort und der Linke-Auge-Bilddaten zum zweiten Ort,
wobei das Verfahren optional zudem umfasst:
Projizieren der Rechte-Auge-Bilddaten und der Linke-Auge-Bilddaten von einem Pixel-Array zum ersten Ort und zum zweiten Ort durch selektives Aktivieren von Pixeln des Pixel-Arrays ausgerichtet auf den ersten Ort und den zweiten Ort durch die Linsenvorrichtung (18).

## Revendications

1. Un système d'affichage (10) pour un véhicule (12), le système d'affichage (10) comprenant :
un écran d'affichage (14) configuré pour émettre des données d'image augmentées dans une direction d'émission, sachant que l'écran d'affichage (14) comprend une première portion (14a) et une deuxième portion (14b) ;
un appareil à lentilles (18) configuré pour recevoir les données d'image augmentées de la part de l'écran d'affichage (14), sachant que l'appareil à lentilles (18) est configuré pour projeter les données d'image augmentées à une distance focale (q) à un emplacement différent de celui d'une surface d'affichage de l'écran d'affichage (14) ; et
un processeur d'image (115) configuré pour générer les données d'image augmentées à partir de données d'image fournies au processeur d'image (115), sachant que les données d'image augmentées sont configurées pour corriger une distorsion provoquée par les données d'image passant à travers l'appareil à lentilles (18),
sachant que le processeur d'image (115) est en outre configuré pour commander une commutation de la projection visuelle d'une première portion (14a) des données d'image entre une première configuration et une deuxième configuration,
sachant que la première portion (14a) de l'écran d'affichage (14) est une région d'affichage neutre commutable comprenant un élément électro-optique qui est commandé par le système d'affichage (10),
sachant que, dans la première configuration, l'élément électro-optique est configuré pour décaler ou appliquer une correction à la première portion des données d'image émises par l'écran d'affichage (14), de manière que la première portion des données d'image semble provenir de la distance focale (q),
sachant que, dans la deuxième configuration, l'élément électro-optique est configuré pour permettre à la première portion des données d'image de passer à travers l'élément électro-optique sans grandissement ou ajustement essentiel du point focal, de manière que la première portion des données d'image dans la première portion (14a) de l'écran d'affichage (14) semble provenir de l'écran d'affichage (14), et
sachant que la deuxième portion (14b) de l'écran d'affichage (14) est configurée pour afficher une deuxième portion des données d'image projetées visuellement à la distance focale (q).

2. Le système d'affichage (10) d'après la revendication 1, sachant que la distance focale (q) est projetée dans une direction de projection opposée à la direction d'émission.

3. Le système d'affichage (10) d'après l'une quelconque des revendications précédentes, comprenant en outre :
au moins un capteur d'image (33) configuré pour capturer les données d'image dans un champ de vision comprenant une scène à proximité du véhicule (12), et fournir les données d'image au processeur d'image (115).

4. Le système d'affichage (10) d'après l'une quelconque des revendications précédentes, sachant que l'appareil à lentilles (18) comprend un réseau de lentilles configuré pour projeter les données d'image augmentées à la distance focale (q) en contrôlant un effet de parallaxe des données d'image augmentées.

5. Le système d'affichage (10) d'après l'une quelconque des revendications précédentes, sachant que le système d'affichage (10) est utilisable pour générer des données d'image pour un affichage autostéréoscopique.

6. Le système d'affichage (10) d'après l'une quelconque des revendications précédentes, sachant que le système d'affichage (10) correspond à un appareil d'affichage vidéo de rétrovision.

7. Le système d'affichage (10) d'après l'une quelconque des revendications précédentes, sachant que la première portion (14a) de l'écran d'affichage (14) est configurée pour afficher au moins un graphique correspondant à une interface utilisateur (102) comprenant une fonctionnalité d'écran tactile.

8. Un procédé pour afficher des données d'image dans un véhicule (12), le procédé comprenant le fait de :
traiter des données d'image pour générer des données d'image augmentées, sachant que les données d'image augmentées corrigent une distorsion provoquée par les données d'image passant à travers un appareil à lentilles (18) ;
émettre les données d'image augmentées à partir d'un écran d'affichage (14), l'écran d'affichage (14) comprenant une première portion (14a) et une deuxième portion (14b) ;
commander, par le processeur d'image (115), une commutation de la projection visuelle d'une première portion des données d'image entre une première configuration et une deuxième configuration ;
transmettre les données d'image augmentées à travers l'appareil à lentilles (18) ; et de
projeter les données d'image depuis l'appareil à lentilles (18) à la distance focale (q),
sachant que la distance focale (q) est située à une plus grande distance d'un passager (16) du véhicule (12) qu'une surface d'affichage de l'écran d'affichage (14), et
sachant que la première portion (14a) de l'écran d'affichage (14) est une région d'affichage neutre commutable comprenant un élément électro-optique qui est commandé par le système d'affichage (10), le procédé comprenant en outre les étapes consistant à :
décaler ou appliquer une correction à la première portion des données d'image émises par l'écran d'affichage (14) par l'élément électro-optique dans la première configuration, de manière que la première portion des données d'image semble provenir de la distance focale (q),
permettre à la première portion des données d'image de passer à travers l'élément électro-optique sans grandissement ou ajustement essentiel du point focal par l'élément électro-optique dans la deuxième configuration, de manière que la première portion des données d'image dans la première portion (14a) de l'écran d'affichage (14) semble provenir de l'écran d'affichage (14), et à
afficher, par la deuxième portion (14b) de l'écran d'affichage (14), une deuxième portion des données d'image projetées visuellement à la distance focale (q).

9. Le procédé d'après la revendication 8, comprenant en outre le fait de :
capturer les données d'image comprenant une scène à proximité du véhicule (12).

10. Le procédé d'après la revendication 9, sachant que la scène comprend un champ de vision dirigé vers l'arrière par rapport à une direction opérationnelle vers l'avant du véhicule (12).

11. Le procédé d'après l'une quelconque des revendications de 8 à 10, comprenant en outre le fait de :
générer indépendamment les données d'image augmentées pour un œil droit du passager (16) en tant que données d'image d'œil droit et pour un œil gauche du passager (16) en tant que données d'image d'œil gauche.

12. Le procédé d'après la revendication 11, comprenant en outre le fait de :
suivre un premier emplacement de l'œil droit et un deuxième emplacement de l'œil gauche du passager (16),
sachant que, facultativement, le procédé comprend en outre le fait de :
projeter les données d'image d'œil droit vers le premier emplacement et les données d'image d'œil gauche vers le deuxième emplacement,
sachant que, facultativement, le procédé comprend en outre le fait de :
projeter les données d'image d'œil droit et les données d'image d'œil gauche à partir d'un réseau de pixels vers le premier emplacement et le deuxième emplacement en activant sélectivement des pixels du réseau de pixels alignés avec le premier emplacement et le deuxième emplacement à travers l'appareil à lentilles (18).
